## Europäisches Patentamt
## European Patent Office
## Office européen des brevets

(19)

(11) Veröffentlichungsnummer : **0 034 663**
**B1**

(12) **EUROPÄISCHE PATENTSCHRIFT**

(45) Veröffentlichungstag der Patentschrift :
**05.06.85**

(21) Anmeldenummer : **80108193.6**

(22) Anmeldetag : **24.12.80**

(51) Int. Cl.⁴ : **C 08 F 10/02, C 08 F 4/68,
C 08 F 4/02, C 08 F 2/34**

(54) **Verfahren zur Herstellung von pulverförmigen Polyolefinen durch Polymerisation in der Gasphase.**

(30) Priorität : **26.02.80 DE 3007057**

(43) Veröffentlichungstag der Anmeldung :
**02.09.81 Patentblatt 81/35**

(45) Bekanntmachung des Hinweises auf die Patenterteilung : **05.06.85 Patentblatt 85/23**

(84) Benannte Vertragsstaaten :
**BE FR GB IT NL**

(56) Entgegenhaltungen :
**DE-A- 1 745 114**
**FR-A- 2 256 180**
**FR-A- 2 376 876**
**US-A- 3 925 338**

(73) Patentinhaber : **CHEMISCHE WERKE HÜLS AG
Postfach 1320
D-4370 Marl 1 (DE)**

(72) Erfinder : **Banke, Horst, Dr.
In der Miere 22
D-4270 Dorsten (DE)**
Erfinder : **Doerk, Klaus, Dr.
Marq-en-Baroeul-Strasse 120
D-4390 Gladbeck (DE)**
Erfinder : **Koch, Klaus, Dr.
Matthias-Claudius-Strasse 4
D-4250 Bottrop (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Hertellung von pulverförmigen Polyolefinen durch Polymerisation von Ethylen oder dessen Copolymerisation mit Propylen und/oder Butylen-(1) in der Gasphase, wobei sich das erfindungsgemäß hergestellte Polyolefinpulver dadurch auszeichnet, daß es für die Verarbeitung zu Formteilen mit Hilfe der für die Verarbeitung von Kunststoffen gebräuchlichen Maschinen und Vorrichtungen ohne vorherige Granulation besonders geeignet ist.

Aus der FR-A-2 376 876 ist bekannt, daß man mit speziellen Ziegler-Katalysatoren auf der Basis von Vanadiumverbindungen Polyolefinpulver herstellen kann, die sehr gute Fließ- bzw. Rieseleigenschaften, hohe Schüttdichten und enge Korngrößenverteilungen aufweisen und sich bei geeigneter Wahl der Cokatalysatoren sowohl für die Verarbeitung auf Extrudern als auch für den Spritzguß eignen.

Jedoch lassen sich diese für das Suspensionsverfahren entwickelten Katalysatoren für die technisch fortschrittlichen Gasphasenverfahren nicht ohne weiteres verwenden.

Üblicherweise benutzt man für die Gasphasen-Polymerisation des Ethylens im Wirbelbett Trägerkatalysatoren. Die Komponenten von Ziegler-Katalysatoren, Übergangsmetallverbindungen vorzugsweise der IV. bis VI. Nebengruppe des Periodensystems, wie Titan-, Vanadin- und Chromverbindungen, und metallorganische Verbindungen, vorzugsweise des Aluminiums, werden, gegebenenfalls in inerten flüssigen Kohlenwasserstoffen als Lösungs- und Verdünnungsmittel, mit den Katalysatorträgern wie Kieselgel, Magnesiumoxichlorid, Magnesiumoxid, Magnesiumhydroxid oder Aluminiumoxid und dergleichen umgesetzt und anschließend getrocknet, und der so erhaltene katalytisch wirksame Feststoff ist nach der Zugabe von aluminiumorganischen Verbindungen zur Polymerisation brauchbar. Man kann auch den Übergangsmetall enthaltenden Feststoff und den mit aluminiumorganischer Verbindung imprägnierten Feststoff getrennt in die Polymerisationszone des Wirbelbettreaktors einführen.

Ein derartiger Trägerkatalysator ist der in FR-A-2 256 180 beschriebene, welcher eine auf Silikagel niedergeschlagene Vanadiumverbindung enthält.

Ein derartiger Trägerkatalysator ist auch der in US-A-3 925 338 offenbarte; er enthält eine auf Polyethylen, Silikagel oder Magnesiumhydroxid niedergeschlagene Vanadiumverbindung und soll über die Teilchengröße des Trägers die Teilchengröße des Polymeren regeln.

Alle diese anorganische Trägermaterialien enthaltenden Katalysatoren haben den Nachteil, daß das mit ihnen hergestellte Polymerisat relativ große Aschegehalte aufweist. Das kann zu sehr unerwünschten Auswirkungen führen bei der Verarbeitung der Polymerisate zu Ferﬁgteilen. Beispielsweise können die Katalysatorträger in der Kunststoffschmelze als Crackkatalysatoren wirksam werden, wodurch sich flüchtige Bestandteile bilden, die Geruchsbelästigungen und Blasenbildungen in der Schmelze verursachen. Auch kann es bei der Lagerung der Kunststoffe zur Aufnahme von atmosphärischer Feuchte kommen, was ebenfalls zur Blasenbildung im Extrudat führt, sofern das Material nicht in aufwendiger Weise vor der Verarbeitung getrocknet wird. Die nach den zum Stand der Technik gehörenden Verfahren herstellbaren Polymerisatpulver lassen außerdem oft hinsichtlich ihrer Fließ- bzw. Rieseleigenschaften und Schüttdichten zu wünschen übrig, so daß diese Produkte granuliert werden müssen, bevor sie auf den üblichen Maschinen zu Formteilen verarbeitet werden können.

Das anspruchsgemäße Verfahren überwindet diese Nachteile. Man erhält die Vanadiumkomponente (1), indem man die beanspruchten Ausgangsstoffe in einem inerten flüssigen Kohlenwasserstoff wie einem gesättigten geradkettigen oder verzweigten aliphatischen oder gesättigten alicyclischen Kohlenwasserstoff, beispeilsweise n-Hexan, 2-Methylpentan, 3-Methylpentan, Cyclohexan oder Gemischen aus derartigen Kohlenwasserstoffen bei Raumtemperatur oder auch bei erhöhter Temperatur miteinander umsetzt. Als Alkoholate eignen sich die handelsüblichen, welche geradkettige oder verzweigte Reste tragen, bevorzugt solche mit 2 bis 4 Kohlenstoffatomen im Alkylrest. Als niederer Alkohol sind insbesondere Ethanol, Propanol-(1) oder Butanol-(1) brauchbar. Um gemäß der Erfindung Katalysatoren zu erzielen, mit denen pulverförmige Polymerisate mit hohen Schüttdichten und hervorragenden Fließeigenschaften zu erhalten sind, ist es erforderlich, bei der Umsetzung der Vanadiumverbindung die beanspruchten Molverhältnisse einzuhalten. Insbesondere die Umsetzung der so erhaltenen Vanadiumverbindung mit der aluminiumorganischen Verbindung gelingt zweckmäßig unter Rühren, wobei spezifische Rührleistungen von 0,1 bis 20 000, vorzugsweise 1 bis 5 000, Watt/m³ vorteilhaft sind. Hierbei fällt die Vanadiumkomponente als Feststoff an; man kann sie aus dem Kohlenwasserstoff abtrennen und unter Inertgas, z. B. feingereinigtem Stickstoff oder Argon, trocknen. Hierfür eignen sich neben anderen Vorrichtungen vor allem Rotationsverdampfer oder Wirbelschichttrockner.

Geeignete erfindungsgemäß eingesetzte Kiesel-Xerogele (2) sind vorteilhaft solche, welche Teilchengrößen d' (DIN 66 145) aufweisen von etwa 50 µm bis 150 µm, spezifische Oberflächen (DIN 66 131) von etwa 200 m²/g bis etwa 700 m²/g sowie Porenvolumina von etwa 0,8 ml/g bis etwa 1,7 ml/g. Diesen Meßdaten entsprechen beispielsweise die im Handel erhältlichen Produkte Ketjensilica F5 (AKZO), Kieselsäure K322 (DEGUSSA) oder Silica Gel Grade 952 (GRACE). Das Kiesel-Xerogel wird vor der Verwendung durch Glühen getrocknet. Vorzugsweise besitzen die Kiesel-Xerogele Glühverluste von < 1 %.

Man setzt das Kiesel-Xerogel, bezogen auf die Vanadiumkomponente, bevorzugt im Gewichtsverhältnis 2 : 1 bis 4 : 1 ein, jedoch sind erfindungsgemäß auch niedrigere oder höhere Gewichtsverhältnisse anwendbar. Niedrigere Gewichtsverhältnisse ab 0,5 : 1 sind nicht mehr erfindungsgemäß wirksam, höhere ab 10 : 1 ergäben im Polymerisat unerwünscht hohe Aschegehalte.

Man kann das Kiesel-Xerogel der Vanadium-Komponente nach dem Eindampfen zumischen, wodurch bereits gebildete Klumpen wieder zerfallen und ein fließfähiges Pulver erhalten wird. In vielen Fällen ist es aber vorteilhaft, der in dem Kohlenwasserstoff suspendierten Vanadium enthaltenden Katalysatorkomponente das feinteilige Kiesel-Xerogel in den oben angegebenen Mengenverhältnissen zuzusetzen und dieses Gemisch einzudampfen. Dadurch werden Agglomerationen bzw. die Bildung von Klumpen von vornherein sicher vermieden.

Anschließend vermischt man die pulverförmige, mit dem Kiesel-Xerogel versetzte Vanadiumkomponente mit dem beanspruchten pulverförmigen Polyolefin guter Fließfähigkeit (3). Als solches eignet sich besonders das gleiche Polymere oder Copolymere, das man herstellen will.

Man setzt die aluminiumorganische Verbindung (4) der Mischung aus den Bestandteilen (1), (2) und (3) zu. Vorteilhafter ist es aber, die aluminiumorganische Verbindung dem pulverförmigen Polyolefin einzuverleiben, bevor dieses mit der Mischung der Bestandteile (1) und (2) in Berührung kommt. Als aluminiumorganische Verbindungen eignen sich insbesondere Aluminiumtrialkyle, beispielsweise Triisobutyl-, Tri-n-octyl-, Tri-n-dodecyl-, Tri-n-tetradecyl- oder Tri-n-hexadecylaluminium. Geeignet sind auch die bekannten Umsetzungsprodukte aus einem Trialkylaluminium oder Dialkylaluminiumhydrid mit einem 1,3-Diolefin, vorzugsweise von Triisobutylaluminium oder Diisobutylaluminiumhydrid mit Isopren, wie sie z. B. als « Isoprenylaluminium » im Handel sind.

Die Imprägnierung des pulverförmigen Polyolefins mit der aluminiumorganischen Komponente hat selbstverständlich unter einem Schutzgas, Stickstoff oder Argon, zu erfolgen und wird zweckmäßig in einer Mischvorrichtung wie beispielsweise einem Pflugscharmischer oder einem Fluidmischer vorgenommen.

Die erfindungsgemäß hergestellten pulverförmigen Katalysatormischungen weisen infolge ihrer guten Fließeigenschaften eine hervorragende Hantierbarkeit auf. So lassen sie sich beispielsweise aus Vorratsbehältern und in Dosiervorrichtungen problemlos und störungsfrei fördern. Zur Polymerisation von Ethylen bzw. Copolymerisation von Ethylen und Propylen und/oder Butylen-(1) in der Gasphase lassen sich die erfindungsgemäßen Katalysatormischungen beispielsweise in den bekannten Vorrichtungen und Verfahren verwendung, wie sie in den deutschen Offenlegungsschriften DE-A-1 607 648 und 1 745 114 beschrieben sind ; auch in den anderen Apparaten, die der Stand der Technik nennt, sind sie infolge ihrer vorteilhaften Eigenschaften ohne weiteres verwendbar.

Zwar ist es aus der Patentanmeldung GB-A-2 010 870 bekannt, für die Polymerisation von Ethylen unter Bedingungen der Suspensions- oder Lösungspolymerisation Ziegler-Trägerkatalysatoren zu verwenden, die mit Kiesel-Xerogel vermischt sind. Dies bezieht sich also auf Verfahren, die flüssige Kohlenwasserstoffe als Verdünnungsmittel verwenden ; die Aufgabe ist, durch zu heftige Polymerisation in der Umgebung der Eintrittsstelle des Katalysators in den Reaktor verursachte Verstopfungen zu vermeiden. Demgegenüber löst das erfindungsgemäße neue Verfahren eine ganz andere Aufgabe, für deren Lösung der zitierten britischen Patentanmeldung keine Lehre zu entnehmen ist, nämlich die störungsfreie, problemlose Hantierung eines festen, trockenen Ziegler-Katalysators in Apparaturen und Vorrichtungen zu seiner Herstellung, seinem Transport und seiner Dosierung in den Polymerisationsreaktor. Außerdem ermöglicht es das erfindungsgemäße neue Verfahren, die oben ausgeführten Nachteile geträgerter Polymerisationskatalysatoren zu vermeiden und Polymerisatpulver hervorragender Qualität zu erzeugen.

Beispiele 1 bis 8

Herstellung der Katalysatoren

Man rührt 182,8 g (1,055 Mol) Vanadyl(V)-chlorid und 257,6 g (1,055 Mol) Vanadyl (V)-n-propylat zusammen in 1,66 l eines Hexanschnittes 63/80 °C 1 Stunde lang bei Raumtemperatur. Man gibt diese Mischung und eine Lösung von 535,7 g (4,22 Mol) Ethylaluminiumdichlorid in 2,30 l des Hexanschnittes 63/80 °C synchron im Laufe von zwei Stunden bei 25 °C zu 2 l des Hexanschnittes unter Rühren mit einem Blattrührer und einer spezifischen Rührleistung von 1 000 Watt/m³. Die erhaltene Suspension erhitzt man danach noch zwei Stunden unter Rückfluß und rührt dabei mit gleicher spezifischer Rührleistung. Nach dem Abkühlen trennt man den Feststoff, wäscht fünfmal mit je 5 l des Hexanschnittes und suspendiert dann in 6 l des Hexanschnittes.

Man vermischt nun jeweils einen Teil der Suspension mit dem Kiesel-Xerogel Ketjensilica F5 (AKZO), das zuvor drei Stunden bei 800 °C geglüht worden ist (Glühverlust 1 000 °C, 1 Stunde = 0,7 Gewichtsprozent), in den Gewichtsverhältnissen von Feststoff zu Kiesel-Xerogel wie 1 : 1, 1 : 2 und 1 : 4 (ersichtlich aus Tabelle 1). Danach destilliert man das Hexan in einem Rotationsverdampfer bei 50 °C und 113 mbar ab und trocknet darauf den Rückstand bei 50 °C und 7 mbar bis zur Gewichtskonstanz.

Man füllt in einen beheizbaren Pflugscharmischer trockenes Polyethylenpulver ein und trocknet 5 Stunden bei 50 °C und unter einem Druck von 10 mbar nach. Dann läßt man feingereinigten Stickstoff in den Mischer einströmen. Innerhalb von 2 Stunden läßt man eine Lösung von dem vorgegebenen Trialkylaluminium (ersichtlich aus Tabelle 1) in Hexan zutropfen. Anschließend mischt man den Ansatz noch 3 Stunden.

Danach läßt man das aus der Vanadiumkomponente und Ketjensilica F5 hergestellte Produkt zu dem vorgelegten Polyethylen-Alkylaluminium-Gemisch einrieseln und vermischt alles 15 Minuten miteinander.

Weitere Einzelheiten zu der Katalysatorherstellung enthält die Tabelle 1.

Polymerisation

### Beispiele 1 bis 5

Zur Polymerisation dient ein zylindrischer, horizontal angeordneter Stahlautoklav mit einem Volumen von 1,65 l, in dem das Polymerisat durch Rotieren von an einer Achse angebrachten Rührelementen (Schaufeln und Verdränger) in Bewegung gehalten wird. Zur Polymerisation legt man in den Autoklaven 90 bis 130 g Polyethylenpulver vor, welches 5 Stunden bei 50 °C und 67 mbar getrocknet und durch dreistündiges Rühren mit 7 mMol Tris-(n-dodecyl)-aluminium pro 100 g Polyethylen inertisiert worden war. Dazu füllt man im Stickstoffgegenstrom die jeweilige Katalysatorprobe ein. Nach 15 Minuten Rühren zur Verteilung des Katalysators in dem vorgelegten Polyethylen stellt man einen Wasserstoffpartialdruck von 5 bar ein, heizt auf die Polymerisationstemperatur von 80 °C auf und drückt dabei langsam Ethylen auf. Dann polymerisiert man 5 Stunden bei einem Druck von 33 bar. Nach Ablauf der Polymerisationsdauer beendet man die Polymerisation durch Entspannen der Monomer. Die jeweiligen Polymerisationsbedingungen und -ergebnisse sind der Tabelle 2 zu entnehmen.

### Beispiele 6 bis 8

Die Polymerisation erfolgt in der gleichen Weise wie bei den Beispielen 1 bis 5, jedoch drückt man vor der Ethylenzugabe die gewählte Menge des jeweiligen 1-Olefins in den Autoklaven.

Die jeweiligen Polymerisationsbedingungen und -ergebnisse sind der Tabelle 3 zu entnehmen.

### Vergleichsbeispiele A und B

Anders als bei den Beispielen 1 bis 8 stellt man die Katalysatoren A und B ohne Zusatz von Ketjensilica F5 her (s. Tabelle 1). Unter den gleichen Polymerisationsbedingungen wie bei den Beispielen 1 bis 5 entsteht bei den Vergleichsbeispielen A und B kein Polyethylen (s. Tabelle 2).

(Siehe Tabellen Seite 5 ff.)

### Tabelle 1

In den Beispielen 1 bis 8 und in den Vergleichsbeispielen A und B verwendete Katalysatoren

| Bei-spiel | Kataly-sator Nr. | Gewichts-verhältnis V-Komponente : Kieselgel | V-Komponente 1) g | Ketjen-silica F5 g | Mischung V-Komp.-K.S. F5 Gew.-% V | Poly-ethylen-pulver kg | $AlR_3$ | mol | $\dfrac{\text{mMol } AlR_3}{\text{g PE}}$ | $\dfrac{\text{g PE}}{\text{mg } V_2O_5}$ |
|---|---|---|---|---|---|---|---|---|---|---|
| 1 | I | 1 : 1 | 31,0 | 31,0 | 7,8 | 18,91 [2] | DDCA | 4,22 | 0,2 | 2,2 |
| 2 | II | 1 : 2 | 14,1 | 28,1 | 4,7 | 2,24 [3] | TNOA | 3,54 | 1,0 | 0,6 |
| 3 | III | 1 : 2 | 52,6 | 105,2 | 4,5 | 22,51 [3] | TNOA | 33,97 | 1,0 | 1,7 |
| 4 + 5 | IV | 1 : 4 | 11,7 | 46,8 | 2,9 | 5,21 [2] | DDCA | 1,17 | 0,2 | 1,7 |
| 6 | V | 1 : 1 | 31,0 | 31,0 | 7,8 | 9,18 [4] | DDCA | 2,06 | 0,2 | 1,1 |
| 7 | VI | 1 : 2 | 14,1 | 28,1 | 4,7 | 4,28 [4] | TNOA | 0,96 | 0,2 | 1,2 |
| 8 | VII | 1 : 2 | 52,6 | 105,2 | 4,5 | 7,26 [4] | TNOA | 2,84 | 0,35 | 0,6 |
| Vgl.-Bei-spiel | | | | | V-Komp. | | | | | |
| A | A | 1 : 0 | 10,0 | – | 14,9 | 1,27 [3] | TNOA | 2,40 | 1,0 | 0,5 |
| B | B | 1 : 0 | 10,0 | – | 14,9 | 1,20 [3] | TNOA | 2,0 | 1,0 | 0,4 |

[1]) die V-Komponente wurde jeweils als Suspension mit einem Feststoffgehalt von 117 g/l Suspension in Hexan angewendet

[2]) Schüttdichte (DIN 53 468) : 0,370 g/cm³ ; Viskositätszahl (DIN 53 728) : 560 cm³/g

[3]) Schüttdichte : 0,330 g/cm³ ; Viskositätszahl : 400 cm³/g

[4]) Schüttdichte : 0,300 g/cm³ ; Viskositätszahl : 420 cm³/g

DDCA = Tris-(n-dodecyl)-aluminium, als 1,5 molare Lösung in Hexan

TNOA = Tri-n-octylaluminium, als 2 molare Lösung in Hexan

Tabelle 2

Polymerisationsbedingungen und -ergebnisse der Beispiele 1 bis 5 und der Vergleichsbeispiele A und B

| Bei-spiel | Nr. | POLYMERISATION[1] | | | | GESAMTPRODUKT | | | |
| | | Katalysator Feststoff | | vorge-legtes Poly-ethylen[2] | Aus-beute[3] | Produkti-vität | Schütt-dichte[6] | Riesel-fähig-keit[7] $V_{R10}$ | Viskosi-täts-zahl[8] | Schmelz-index[9] MFI 190/5 |
| | | g | mgatom V | g | g | $\dfrac{kg\ PE}{mgatom\ V}$ | $\dfrac{g}{cm^3}$ | $\dfrac{cm^3}{s}$ | $\dfrac{cm^3}{g}$ | $\dfrac{g}{10\ min}$ |
| 1 | I | 4,5 | 0,020 | 118 [4] | 59 | 2,95 | 0,380 | 5,6 | 390 | 0,21 |
| 2 | II | 2,2 | 0,025 | 109 [4] | 106 | 4,24 | 0,350 | 3,5 | 310 | 1,70 |
| 3 | III | 4,8 | 0,021 | 94 [5] | 85 | 4,05 | 0,380 | 3,3 | 290 | 1,70 |
| 4 | IV | 3,8 | 0,022 | 130 [5] | 55 | 2,50 | 0,385 | 5,9 | 400 | 0,15 |
| 5 | IV | 4,1 | 0,024 | 99 [5] | 55 | 2,29 | 0,390 | 6,9 | 400 | 0,25 |
| Vgl.-bei-spiel | | | | | | | | | | |
| A | A | 2,0 | 0,031 | 119 [4] | - | - | - | - | - | - |
| B | B | 2,4 | 0,035 | 104 [4] | - | - | - | - | - | - |

[1] Wasserstoffpartialdruck 5 bar ; Gesamtdruck 33 bar ; 80 °C ; 5 h

[2] durch Behandlung mit 0,07 mMol Tris-(n-dodecyl)-aluminium (Beispiel 2 : 0,044 mMol) pro g PE inertisiertes Polyethylen

[3] bei der Polymerisation gebildetes Polyethylen

[4] Schüttdichte (DIN 53 468) : 0,330 g/cm³ ; Rieselfähigkeit (DIN 53 492) : $V_{R10}$ = 2,4 cm³/s Viskositätszahl (DIN 53 728) : 440 cm³/g

[5] Schüttdichte : 0,370 g/cm³ ; Rieselfähigkeit : $V_{R10}$ = 6,6 cm³/s ; Viskositätszahl : 560 cm³/g

[6] DIN 53 468

[7] DIN 53 492

[8] DIN 53 728

[9] DIN 53 735

## Tabelle 3

### Polymerisationsbedingungen und -ergebnisse der Beispiele 6 bis 8

| Beispiel | POLYMERISATION[1] | | | | | | | | Produktivität |
|---|---|---|---|---|---|---|---|---|---|
| | Nr. | Katalysator | | vorgelegtes Polyethylen[2] | Monomere | | $P_{H_2}$ | Ausbeute[3] | |
| | | Feststoff g | mgatom V | g | | g | bar | g | $\dfrac{\text{kg Polymerisat}}{\text{mgatom V}}$ |
| 6 | V | 3,7 | 0,021 | 90 [4] | Butylen-(1) | 35 | 0,5 | 96 | 4,57 |
| 7 | VI | 3,7 | 0,029 | 106 [4] | Propylen | 30 | 1,0 | 315 | 10,86 |
| 8 | VII | 2,8 | 0,048 | 106 [4] | Propylen | 30 | 0,5 | 140 | 2,91 |

[1] Gesamtdruck 33 bar, 80 °C, 5 h
[2] Durch Behandlung mit 0,07 mMol Tris-(n-dodecyl)-aluminium pro g PE inertisiertes Polyethylen
[3] Bei der Polymerisation entstandenes Copolymerisat
[4] Dichte (DIN 53 479) : 0,947 g/cm³ ; Schüttdichte (DIN 53 468) : 0,300 g/cm³ ; Rieselfähigkeit (DIN 53 492) :
$V_{R10}$ = 4,2 cm³/s ; Viskositätszahl (DIN 53 728) : 420 cm³/g

Tabelle 3 (Fortsetzung)

| Beispiel | Dichte[1] des gebilde-ten Copolymerisats[2] $\dfrac{g}{cm^3}$ | GESAMTPRODUKT | | | | | |
| | | Dichte[1] $\dfrac{g}{cm^3}$ | Schütt-dichte[3] $\dfrac{g}{cm^3}$ | Rieselfähig-keit[4] $V_{R10}$ $\dfrac{cm^3}{s}$ $\quad$ $V_{R15}$ $\dfrac{cm^3}{s}$ | | Viskositäts-zahl[5] $\dfrac{cm^3}{g}$ | Schmelzindex[6] MFI 190/5 $\dfrac{g}{10\ min}$ |
| 6 | 0,922 | 0,934 | 0,355 | – | 14,5 | 370 | 0,54 |
| 7 | 0,935 | 0,938 | 0,340 | – | 5,6 | 290 | 1,60 |
| 8 | 0,927 | 0,934 | 0,380 | 5,6 | – | 410 | 0,24 |

[1] DIN 53 479

[2] berechneter Wert unter Zugrundelegung der Dichte des vorgelegten Polyethylens (0,947 g/cm³), der Dichten der insgesamt nach Polymerisationsende vorhandenen Polyethylens und der entsprechenden Polyethylenmengen zu Beginn und am Ende der Polymerisation

[3] DIN 53 468

[4] DIN 53 492

[5] DIN 53 728

[6] DIN 53 735

## Beispiel 9

Bei der Herstellung des Katalysators verfährt man wie in Beispiel 1, setzt anstelle von Tri-n-dodecylaluminium jedoch Tri-n-tetradecylaluminium ein. Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Beispiel 10

Bei der Herstellung der Katalysatoren verfährt man wie in Beispiel 4. Anstelle des Kiesel-Xerogels Ketjensilica F5 setzt man die Kieselsäure K 322 (DEGUSSA) nach dreistündigem Erhitzen auf 800 °C ein. Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Beispiel 11

Die Katalysatorherstellung erfolgt wie bei Beispiel 4. Anstelle von Ketjensilica F5 wendet man, aber als Kiesel-Xerogel, Silica Gel Grade 952 (GRACE) an, ebenfalls nach dreistündigem Erhitzen auf 800 °C. Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Beispiel 12

Zu der Herstellung des Katalysators rührt man 138,6 g (0,8 Mol) Vanadyl (V)-chlorid und 293,0 g (1,2 Mol) Vanadyl (V)-n-propylat zusammen in 1,6 l eines Hexanschnittes 63/80 °C 1 Stunde lang bei Raumtemperatur. Diese Mischung und eine Lösung von 507,8 g (4,0 Mol) Ethylaluminiumdichlorid in 2,2 l des Hexanschnittes 63/80 °C gibt man synchron in Laufe von 2 Stunden bei 25 °C zu 2 l des Hexanschnittes unter Rühren mit einem Blattrührer und einer spezifischen Rührleistung von 1 000 Watt/m³. Man erhitzt die erhaltene Suspension danach noch 2 Stunden unter Rückfluß und rührt dabei mit gleicher spezifischer Rührleistung. Nach dem Abkühlen trennt man den Feststoff ab, wäscht fünfmal mit je 5 l des Hexanschnittes und suspendiert 6 l des Hexanschnittes. Die Katalysatorherstellung wird dann fortgesetzt wie in Beispiel 2 (vergl. auch Tabelle 1). Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Beispiel 13

Zur Katalysatorherstellung rührt man 208,0 g (1,2 Mol) Vanadyl (V)-chlorid und 195,4 g (0,8 Mol) Vanadyl (V)-n-propylat zusammen in 1,6 l eines Hexanschnittes 63/80 °C 1 Stunde lang bei Raumtemperatur. Diese Mischung und eine Lösung von 507,8 g (4,0 Mol) Ethylaluminiumdichlorid in 2,2 l des Hexanschnittes 63/80 °C gibt man synchron im Laufe von 2 Stunden bei 25 °C zu 2 l des Hexanschnittes unter Rühren mit einem Blattrührer und einer spezifischen Rührleistung von 1 000 Watt/m³. Die erhaltene Suspension erhitzt man danach noch 2 Stunden unter Rückfluß und rührt dabei mit gleicher spezifischer Rührleistung. Nach dem Abkühlen trennt man den Feststoff ab, wäscht fünfmal mit je 5 l des Hexanschnittes und suspendiert in 6 l des Hexanschnittes. Dann verfährt man weiter wie in Beispiel 2. Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Beispiel 14

Zur Herstellung des Katalysators rührt man 183 g (1,06 Mol) Vanadyl (V)-chlorid und 258 g (1,06 Mol) Vanadyl (V)-n-propylat zusammen mit 1,77 l eines Hexanschnittes 63/80 °C 1 Stunde lang bei Raumtemperatur. Diese Mischung und eine Lösung von 620 g (4 Mol) Isobutylaluminiumdichlorid in 3,45 l des Hexanschnittes 63/80 °C gibt man synchron im Laufe von 2 Stunden zu 2 l des Hexanschnittes bei 32 bis 36 °C unter Rühren mit einem Blattrührer und einer spezifischen Rührleistung von 78 Watt/m³. Man erhitzt die erhaltene Suspension danach noch 2 Stunden unter Rückfluß und rührt dabei mit gleicher spezifischer Rührleistung. Nach dem Abkühlen trennt man den Feststoff ab, wäscht fünfmal mit je 5 l des Hexanschnittes und suspendiert in 6 l des Hexanschnittes. Danach verfährt man genau wie in Beispiel 2. Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Beispiel 15

Zur Herstellung des Katalysators erhitzt man 122,3 g (705,7 mMol) Vanadyl (V)-chlorid und 172,3 g (705,7 mMol) Vanadyl (V)-n-propylat in 1,7 l eines Hexanschnittes 63/80 °C unter Stickstoff 2 Stunden auf 55 °C. Nach Abkühlen gibt man bei 20 bis 25 °C eine Lösung von 340,3 g (2 822,6 mMol) Diethylaluminiumchlorid in 1,43 l des gleichen Hexanschnittes innerhalb 2 Stunden unter Rühren mit einem Blattrührer und einer spezifischen Rührleistung von 126 Watt/m³ zu. Danach rührt man die erhaltene Suspension noch 2 Stunden bei 55 °C mit gleicher Rührleistung weiter. Nach dem Abkühlen trennt man den Feststoff ab, wäscht ihn fünfmal mit je 5 l des Hexanschnittes und suspendiert in 6 l des Hexanschnittes. Danach setzt man die Katalysatorherstellung — wie für Beispiel 2 beschrieben — fort. Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Beispiel 16

Zur Katalysatorherstellung erhitzt man 346,6 g (2,0 Mol) Vanadyl (V)-chlorid und 180,3 g (3,0 Mol) Propanol-(1) zusammen mit 1,59 l eines Hexanschnittes 63/80 °C 2 Stunden lang unter Rückfluß, wobei Chlorwasserstoff entweicht. Danach gibt man diese Mischung und eine Lösung von 507,8 g (4,0 Mol) Ethylaluminiumdichlorid in 2,25 l des Hexanschnittes bei 63/80 °C synchron im Laufe von 2 Stunden zu 2 l des Hexanschnittes bei 28 °C unter Stickstoff und unter Rühren mit einem Blattrührer und einer spezifischen Rührleistung von 95 Watt/m³. Man erhitzt die erhaltene Suspension danach noch eine Stunde unter Rückfluß und rührt dabei mit gleicher Rührleistung. Nach dem Abkühlen trennt man den Feststoff ab, wäscht fünfmal mit je 5 l des Hexanschnittes und suspendiert dann in 6 l des Hexanschnittes. Darauf setzt man die Katalysatorherstellung genau wie in Beispiel 2 fort. Die Polymerisation erfolgt in der bei dem Beispiel 1 angegebenen Weise. Die Polymerisationsbedingungen sind die gleichen wie bei Beispiel 1. Die Polymerisationsergebnisse sind der Tabelle 4 zu entnehmen.

## Tabelle 4

Polymerisationsbedingungen und -ergebnisse der Beispiele 9 bis 16

| Bei-spiel | Katalysator | | | vorge-legtes Poly-ethylen[2] | Aus-beute[3] | Produkti-vität | Schütt-dichte[6] | Riesel-fähig-keit[7] | Viskosi-täts-zahl[8] | Schmelz-index[9] |
|---|---|---|---|---|---|---|---|---|---|---|
| | Nr. | Feststoff | | | | | | $V_{R10}$ | | MFI 190/5 |
| | | g | mgatom V | g | g | $\dfrac{\text{kg PE}}{\text{mgatom V}}$ | $\dfrac{\text{g}}{\text{cm}^3}$ | $\dfrac{\text{cm}^3}{\text{s}}$ | $\dfrac{\text{cm}^3}{\text{g}}$ | $\dfrac{\text{g}}{\text{10 min}}$ |
| 9 | VIII | 4,9 | 0,022 | 112 [4] | 96 | 4,36 | 0,400 | 5,3 | 350 | 0,78 |
| 10 | IX | 4,2 | 0,025 | 103 [5] | 50 | 2,00 | 0,350 | 3,0 | 370 | 0,59 |
| 11 | X | 4,0 | 0,023 | 97 [5] | 57 | 2,48 | 0,360 | 3,2 | 390 | 0,25 |
| 12 | XI | 2,1 | 0,024 | 114 [5] | 84 | 3,50 | 0,370 | 3,5 | 390 | 0,24 |
| 13 | XII | 2,0 | 0,023 | 99 [5] | 85 | 3,70 | 0,380 | 3,7 | 370 | 0,51 |
| 14 | XIII | 1,9 | 0,022 | 107 [5] | 79 | 3,59 | 0,380 | 3,5 | 390 | 0,21 |
| 15 | XIV | 2,2 | 0,026 | 95 [5] | 74 | 2,85 | 0,380 | 4,0 | 400 | 0,20 |
| 16 | XV | 2,0 | 0,023 | 112 [5] | 97 | 4,22 | 0,390 | 3,6 | 290 | 1,6 |

[1]) Wasserstoffpartialdruck 5 bar ; Gesamtdruck 33 bar ; 80 °C ; 5 h
[2]) durch Behandlung mit 0,07 mMol Tris-(n-dodecyl)-aluminium pro g PE inertisiertes Polyethylen
[3]) bei der Polymerisation gebildetes Polyethylen
[4]) Schüttdichte (DIN 53 468) : 0,330 g/cm³ ; Rieselfähigkeit (DIN 53 492) : $V_{R10}$ = 2,4 cm³/s ; Viskositätszahl (DIN 53 728) : 440 cm³/g
[5]) Schüttdichte (DIN 53 468) : 0,370 g/cm³ ; Rieselfähigkeit (DIN 53 492) : $V_{R10}$ = 6,6 cm³/s ; Viskositätszahl (DIN 53 728) : 560 cm³/g
[6]) DIN 53 468
[7]) DIN 53 492
[8]) DIN 53 728
[9]) DIN 53 735

## Patentansprüche

1. Verfahren zur Herstellung von pulverförmigen Polyolefinen durch Polymerisation von Ethylen sowie Copolymerisation von Ethylen mit Propylen und/oder Butylen-(1) in der Gasphase unter Drücken von 10 bis 100 bar, vorzugsweise 25 bis 50 bar, bei Temperaturen von 50 bis 110 °C unter Anwendung von Ziegler-Katalysatoren, bestehend aus einer Vanadium- und einer aluminiumorganischen Komponente, gegebenenfalls in Gegenwart von Wasserstoff, dadurch gekennzeichnet, daß man einen Katalysator aus einer Mischung folgender Bestandteile verwendet :

1) einer Vanadium-Komponente, die man durch Reaktion einer Mischung aus Vanadyl-(V)-chlorid und Vanadyl-(V)-alkoholat im Molverhältnis 1 : 2 bis 2 : 1 oder eines Umsetzungsproduktes von Vanadyl-(V)-chlorid mit Ethanol, Propanol-(1) oder Butanol-(1) im Molverhältnis 1 : 2 bis 1 : 1 einerseits und Ethylaluminiumdichlorid, Diethylaluminiumchlorid, Isobutylaluminiumdichlorid und/oder Diisobutylaluminiumchlorid andererseits im Molverhältnis V : Al wie 1 : 3 bis 1 : 1 in einem inerten Lösungsmittel unter Rühren mit spezifischer Rührleistung von 0,1 bis 20 000 Watt/m$^3$, vorzugsweise 1 bis 5 000 Watt/m$^3$ und Abtrennung des erhaltenen Feststoffes gewinnt,

2) einem geglühten feinteiligen Kiesel-Xerogel in Gewichtsverhältnissen, bezogen auf die Vanadium-Komponente, von 0,5 : 1 bis 10 : 1, das man der Vanadium-Komponente zumischt.

3) einem rieselfähigen, pulverförmigen Polyolefin mit mittleren Korndurchmessern bis zu 1 000 μm und in Mengen von 0,5 bis 3,0 Gramm pro Milligramm der Vanadium-Komponente, berechnet als Vanadinpentoxid, sowie

4) einer aluminiumorganischen Verbindung der allgemeinen Formel $R_nAlX_{3-n}$, in der R einen gesättigten Kohlenwasserstoffrest mit 2 bis 20 Kohlenstoffatomen bedeutet, X ein Halogenatom und n eine Zahl von 1 bis 3, oder einem Umsetzungsprodukt aus einem Trialkylaluminium oder Dialkylaluminiumhydrid mit einem 1,3-Diolefin, in Mengen von 0,1 bis 1,0 mMol pro Gramm pulverförmiges Polyolefin.

2. Verfahren zur Herstellung von Katalysatoren für die Polymerisation nach Patentanspruch 1, dadurch gekennzeichnet, daß man den Bestandteil (2) dem suspendierten Bestandteil (1) vor dessen Abtrennung zufügt.

3. Verfahren nach den Patentansprüchen 1 und 2, dadurch gekennzeichnet, daß man den Bestandteil (4) dem Bestandteil (3) zufügt, bevor man diese Mischung mit der Mischung aus den Bestandteilen (1) und (2) vereinigt.

## Claims

1. A process for the production of a pulverulent polyolefin by polymerisation of ethylene or copolymerisation of ethylene with propylene and/or 1-butene in the gas phase at a pressure of 10 to 100 bar, preferably 25 to 50 bar, at a temperature of 50 to 110 °C using a Ziegler catalyst comprising a vanadium component and an organo-aluminium component, optionally in the presence of hydrogen, characterised in that a catalyst comprising a mixture of the following ingredients is used :

1) a vanadium component which has been obtained by reaction of, on the one hand, a mixture of vanadium (V) chloride and vanadium (V) alcoholate in a molar ratio of 1 : 2 to 2 : 1 or a reaction product of vanadium (V) chloride and ethanol, 1-propanol or 1-butanol in a molar ratio of 1 : 2 to 1 : 1 and, on the other hand, ethylaluminium dichloride, diethylaluminium chloride, isobutylaluminium dichloride and/or diisobutylaluminium chloride, the reaction being carried out at a molar ratio V : Al of 1 : 3 to 1 : 1 in an inert solvent whilst stirring with a specific stirring power of 1 to 20,000 watts/m$^3$, preferably 1 to 5,000 watts/m$^3$, followed by separation of the resulting solids,

2) a calcined, particulate silica xerogel in a weight ratio, based on the vanadium component, of 0.5 : 1 to 10 : 1, mixed with the vanadium component,

3) a flowable, pulverulent polyolefin of average particle diameter up to 1,000 μm in an amount of 0.5 to 3.0 g per mg of the vanadium component, calculated as vanadium pentoxide, and

4) an organoaluminium compound of the general formula $R_nAlX_{3-n}$ in which R is a saturated hydrocarbon radical of 2 to 20 carbon atoms, X is a halogen atom and n is a number from 1 to 3, or a reaction product of an aluminium trialkyl or a dialkyl-aluminium hydride with a 1,3-diolefin, in an amount of 0.1 to 1.0 millimol per g of pulverulent polyolefin.

2. A process for the preparation of a catalyst for the polymerisation according to claim 1, characterised in that component (2) is added to the suspended component (1) before the said separation.

3. A process according to claim 1 or 2, characterised in that component (4) is added to component (3) before the resulting mixture is composited with the mixture of components (1) and (2).

## Revendications

1. Procédé de préparation de polyoléfines pulvérulentes par polymérisation d'éthylène, ainsi que par copolymérisation de l'éthylène avec le propylène et/ou le butylène-(1) en phase gazeuse sous des pressions de 10 à 100 bar, de préférence de 25 à 50 bar, à des températures de 50 à 110 °C avec

**0 034 663**

application de catalyseurs Ziegler, formés d'un constituant vanadium et d'un constituant organo-aluminique, éventuellement en présence d'hydrogène, caractérisé par le fait que l'on utilise un catalyseur formé d'un mélange des constituants suivants :

1) un constituant vanadium que l'on obtient en faisant réagir un mélange de chlorure de vanadyle-(V) et d'alcoolate de vanadyle-(V) dans un rapport molaire de 1 : 2 à 2 : 1 ou un produit de réaction du chlorure de vanadyle-(V) sur l'éthanol, le propanol-(1) ou le butanol-(1) dans un rapport molaire de 1 : 2 à 1 : 1, d'une part, et le dichlorure d'éthyl-aluminium, le chlorure de diéthyl-aluminium, le dichlorure d'isobutyl-aluminium et/ou le chlorure de di-isobutyl-aluminium, d'autre part, dans un rapport molaire V : Al de 1 : 3 à 1 : 1, dans un solvant inerte, en agitant, avec une puissance spécifique de 0,1 à 20 000 $W/m^3$, de préférence de 1 à 5 000 $W/m^3$, et en séparant le solide obtenu,

2) un xérogel de silice calciné en fines particules, dans des rapports pondéraux, relativement au constituant vanadium, de 0,5 : 1 à 10 : 1, que l'on mélange au constituant vanadium,

3) une polyoléfine pulvérulente apte à l'écoulement, ayant des diamètres moyens de grain allant jusqu'à 1 000 $\mu$m, et à raison de 0,5 à 3,0 g par milligramme du constituant vanadium, calculé en pentoxyde de vanadium, ainsi que

4) un composé organo-aluminique de la formule générale $RnAlX_{3-n}$, dans laquelle R représente un radical hydrocarbure saturé contenant de 2 à 20 atomes de carbone, X un atome d'halogène et n un nombre d'une valeur de 1 à 3, ou un produit de réaction d'un trialkyl-aluminium ou d'un hydrure de dialkyl-aluminium sur une 1,3-dioléfine, à raison de 0,1 à 1,0 millimole par gramme de polyoléfine pulvérulente.

2. Procédé de préparation de catalyseurs pour la polymérisation selon la revendication 1, caractérisé par le fait que l'on ajoute le constituant (2) au constituant (1) en suspension, avant de séparer celui-ci.

3. Procédé selon l'une des revendications 1 et 2, caractérisé par le fait que l'on ajoute le constituant (4) au constituant (3) avant de réunir ce mélange au mélange des constituants (1) et (2).

13